# EUROPEAN PATENT SPECIFICATION

(11) **EP 3 324 587 B1**
(45) Date of publication and mention of the grant of the patent: **29.09.2021**
(21) Application number: 16823708.9
(22) Date of filing: 10.05.2016
(51) Int. Cl.: H04L 12/761

(54) **MULTICAST METHOD, MULTICAST RELAY DEVICE AND SYSTEM**
MULTICAST-VERFAHREN, MULTICAST-RELAISVORRICHTUNG UND SYSTEM
PROCÉDÉ DE MULTIDIFFUSION, DISPOSITIF ET SYSTÈME DE RELAIS DE MULTIDIFFUSION

(30) Priority: 13.07.2015 CN 201510410392
(43) Date of publication of application: 23.05.2018
(73) Proprietor: ZTE Corporation, Shenzhen, Guangdong 518057 (CN)
(72) Inventor: JIANG, Yuelong, Shenzhen Guangdong 518057 (CN)
(74) Representative: Aipex B.V.
(86) International application number: PCT/CN2016/081602
(87) International publication number: WO 2017/008561

(56) References cited:
- CN-A- 101 867 804
- CN-A- 101 924 997
- CN-A- 103 595 546
- CN-A- 103 888 909
- US-A1- 2006 098 607
- US-A1- 2014 177 511
- SERAGHITI A ET AL: "Multicast TV Channels over Wireless Neutral Access Networks", EVOLVING INTERNET (INTERNET), 2010 SECOND INTERNATIONAL CONFERENCE ON, IEEE, PISCATAWAY, NJ, USA, 20 September 2010 (2010-09-20), pages 153-158, XP031785863, ISBN: 978-1-4244-8150-7

## Description

### Technical Field

The present application relates to, but is not limited to, the field of Wireless Local Area Network (WLAN) communications, and more particularly to a multicast method, multicast relay device, and a multicast system.

### Background

As a WLAN technology develops rapidly, a WLAN is applied to families and enterprises increasingly. A traditional wired network connection has been used less and less, some families or enterprises do not deploy a wired local area network any longer, but the WLAN is used to cover the whole family or enterprise.

The WLAN is accessed according to an 802.11n/802.11ac protocol in the related art, a maximum physical layer rate can be kilo-mega, and a user will not feel a lag. However, the 802.11n/802.11ac protocol cannot strongly support a multicast transmission video service. An 802.11 protocol cluster specifies that a multicast message does not have an Acknowledge Character (ACK) and a retransmission protection mechanism, and message loss caused by environment interference cannot be prevented. In order to ensure transmission reliability, a wireless chip usually uses a low physical layer rate (such as 1Mbps, 6Mbps) to transmit a multicast message, and this makes it difficult to apply a data service in a multicast mode into a WLAN scenario.

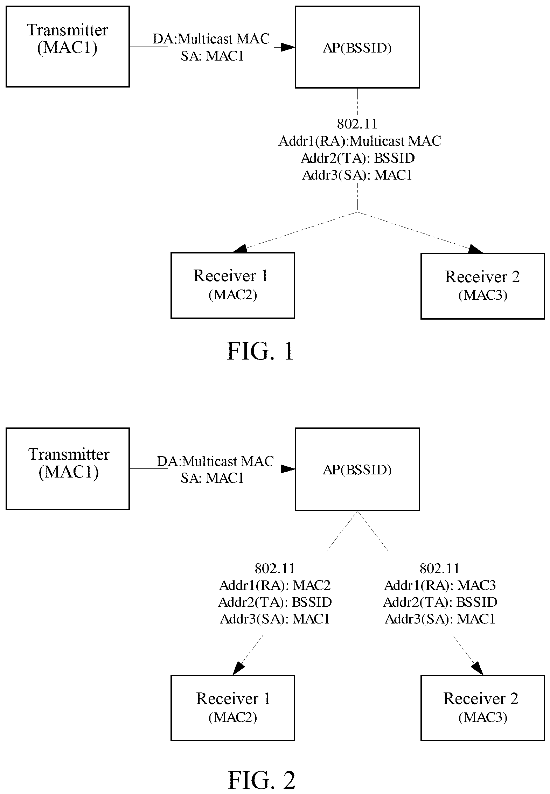

A typical wireless multicast transmission scenario is as shown in FIG. 1, and a target receiver may be one or more wireless terminal devices joining in a certain multicast group. After a transmitter sends a message of which a destination address is a multicast address to an Access Point (AP), the AP forwards the message, and uses the multicast address as a target Receiver Address (RA), and the target receiver processes the received multicast message. This multicast transmission scenario mainly has the problems as follows. (1) A transmission rate of a multicast message is very low, and cannot satisfy a large-flow application scenario such as multicast video playing. (2) An air interface transmission packet loss of the multicast message is very high. (3) Because a physical layer rate of the multicast message transmission is very low, the air interface occupancy time is long, and all wireless devices under the same channel will also be affected during multicast transmission.

In order to solve the problem about a wireless multicast transmission scenario as shown in FIG. 1, a method as shown in FIG. 2 is usually used to solve the problem. That is, a destination address of a multicast message is modified to be a Media Access Control (MAC) address of a corresponding subordinate receiving device in an AP. A target receiver may be one or more wireless terminal devices joining in a certain multicast group. After a transmitter sends a message of which a destination address is a multicast address to the AP, the AP modifies a destination address of a multicast message to be an MAC address of a corresponding subordinate receiving device, and then forwards the message. The multicast transmission scenario mainly has the problems as follows. (1) In this manner, a next multicast stream is copied into multiple multicast streams to send out, the occupancy bandwidth of an air interface is high. (2) In this manner, when a message is transmitted to a target receiver, information of a multicast MAC address has been deleted, a target receiver can only serve as a player, and the multicast streams cannot be transmitted to a playing device in other sub-networks.

The features of the preamble of the independent claims are known from SERAGHITI A ET AL: "Multicast TV Channels over Wireless Neutral Access Networks", 20 September 2010, pages 153-158. Related technologies are known from US 2006/098607 A1.

US 2006/0098607 A1 discloses a system and method for a multicast routing algorithm to work in infrastructure based mesh networks.

### Summary

The following is a brief introduction for a subject described herein in detail. The brief introduction is not intended to restrict the protection scope of claims.

The present application provides a multicast method and a multicast relay device according to appended independent claims, which solve the problem in the related art of long air interface occupancy time and influence on other wireless devices under the same channel caused by low multicast service transmission rate in a WLAN or increase of data transmission pressure of the WLAN caused by simple conversion to unicast transmission, a balance between maintaining advantages of multicast transmission and avoiding influence on other in-network devices caused by long-time air interface occupancy is achieved, an application mode of the WLAN is expanded, thus ensuring a more efficient and reliable implementation for multicast services in a large-scale WLAN environment that is complicated increasingly. Further improvements and embodiments are provided in the dependent claims.

Also provided is a multicast method. The method includes that:
multicast service data forwarded by an AP is received through a unicast transmission protocol; the received multicast service data is forwarded to a multicast group through a multicast transmission protocol.

The multicast service data received through the unicast transmission protocol includes: an MAC address of a source transmitter of the multicast service data, an MAC address of the AP, a multicast MAC address, and an MAC address of a device receiving multicast service data through a unicast transmission protocol.

According to an aspect, the multicast service data forwarded to the multicast group through the multicast transmission protocol includes: an MAC address of the source transmitter of the multicast service data and the multicast MAC address.

According to an aspect, the step that the received multicast service data is forwarded to a multicast group through a multicast transmission protocol includes that: the received multicast service data is forwarded to the multicast group through a multicast transmission protocol via a WLAN; or, the received multicast service data is forwarded to the multicast group through a multicast transmission protocol via a wired local area network.

The present application also provides a computer-readable storage medium storing computer-executable instructions, the above-mentioned method is implemented when the computer-executable instructions are executed.

Also provided is a multicast relay device, including:
a wireless receiving module, configured to receive, through a unicast transmission protocol, multicast service data forwarded by an AP; and
a data forwarding module, configured to forward the received multicast service data to a multicast group through a multicast transmission protocol.

The multicast service data received by the wireless receiving module includes: an MAC address of a source transmitter of the multicast service data, an MAC address of the AP, a multicast MAC address, and an MAC address of the multicast relay device.

According to an aspect, the multicast service data forwarded to the multicast group by the data forwarding module includes: the MAC address of the source transmitter of the multicast service data and the multicast MAC address.

According to an aspect, the data forwarding module is configured to forward, via a wired local area network, the received multicast service data to the multicast group through a multicast transmission protocol;
or, the data forwarding module is configured to forward, via a WLAN, the received multicast service data to the multicast group through a multicast transmission protocol;
or, the multicast relay device is integrated with a target receiver in the multicast group, and the data forwarding module is configured to send, when the multicast relay device is integrated with the target receiver in the multicast group, the received multicast service data to a multicast service application corresponding to the integrated target receiver through a device internal interface.

According to an aspect, when the multicast relay device may be cascaded with another multicast relay device, a wireless receiving module of a subsequent multicast relay device is configured to receive, through a multicast transmission protocol, multicast service data forwarded by a preceding multicast relay device.

A data forwarding module of the preceding multicast relay device is configured to forward, after the wireless receiving module receives the multicast service data forwarded by the preceding multicast relay device through the multicast transmission protocol, the received multicast service data to the subsequent multicast relay device through the multicast transmission protocol.

According to an aspect, the multicast service data forwarded by the preceding multicast relay device includes: an MAC address of the source transmitter, an MAC address of the preceding multicast relay device, a multicast MAC address, and an MAC address of the multicast relay device.

The multicast service data forwarded to the subsequent multicast relay device includes: an MAC address of the source transmitter, an MAC address of the multicast relay device, a multicast MAC address, and an MAC address of the subsequent multicast relay device.

Also provided is a multicast system, including: a source transmitter, an AP, the multicast relay device provided by the present application, and a target receiver,
wherein the source transmitter is configured to send source multicast service data;
the AP is configured to send multicast service data to the multicast relay device through a unicast transmission protocol;
the multicast relay device is configured to receive the multicast service data sent by the AP, and forward the received multicast service data to a multicast group through a multicast transmission protocol; and
the target receiver is configured to receive the multicast service data sent by the multicast relay device, and the target receiver pertains to the multicast group.

The multicast service data sent to the multicast relay device by the AP includes: an MAC address of the source transmitter, an MAC address of the AP, a multicast MAC address, and an MAC address of the multicast relay device.

According to an aspect, the multicast service data forwarded to the target receiver by the multicast relay device includes: an MAC address of the source transmitter and the multicast MAC address.

According to an aspect, the multicast relay device and the target receiver are connected via a WLAN;
or, the multicast relay device and the target receiver are connected via a wired local area network;
or, the multicast relay device and the target receiver are integrated.

According to an aspect, the multicast relay device may be cascaded with another multicast relay device, and during cascaded connection, a preceding multicast relay device is further configured to forward the received multicast service data to a subsequent multicast relay device through the multicast transmission protocol; and
during cascaded connection, the subsequent multicast relay device is configured to receive the multicast service data forwarded by the multicast relay device, and forward the received multicast service data to the multicast group through the multicast transmission protocol.

According to an aspect, the multicast service data sent to the subsequent multicast relay device by the multicast relay device includes: an MAC address of the source transmitter, an MAC address of the multicast relay device, a multicast MAC address, and an MAC address of the subsequent multicast relay device.

After drawings and detailed description are read and understood, other aspects may be understood.

### Brief Description of Drawings

FIG. 1 is a schematic diagram of a multicast solution based on a protocol standard in the related art.
FIG. 2 is a schematic diagram of a multicast solution of multicast-to-unicast in the related art.
FIG. 3 is a flowchart of a multicast method provided in the present application.
FIG. 4 is a structure diagram of a multicast relay device provided in the present application.
FIG. 5 is a schematic diagram of a multicast system provided in an embodiment 1 of the present application.
FIG. 6 is a schematic diagram of a multicast system provided in an embodiment 2 of the present application.
FIG. 7 is a schematic diagram of a multicast system provided in an embodiment 3 of the present application.
FIG. 8 is a schematic diagram of a multicast system provided in an embodiment 4 of the present application.

### Detailed Description

The present application will be described hereinbelow in conjunction with the drawings and specific embodiments in detail. It is important to note that the embodiments in the present application and the characteristics in the embodiments may be combined mutually under the condition of no conflicts.

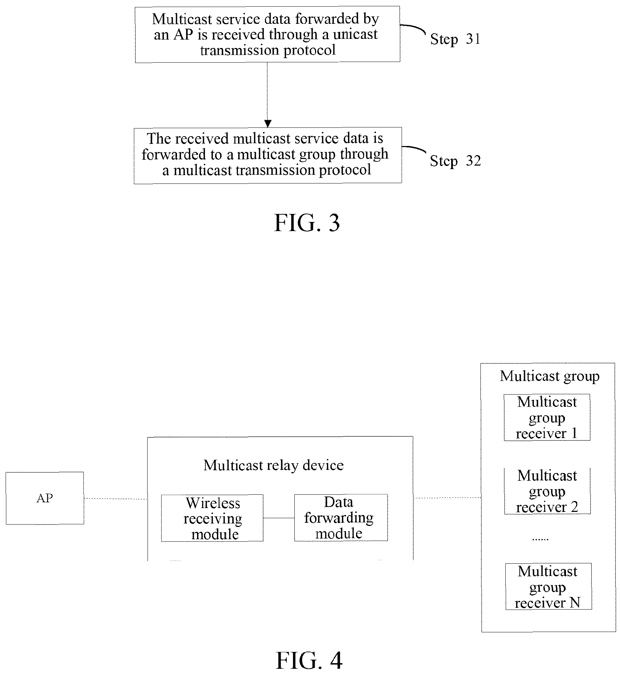

The present application provides a multicast method. The method is used for multicast services in a WLAN environment. As shown in FIG. 3, the method includes the steps as follows.

In step 31, multicast service data forwarded by an AP is received through a unicast transmission protocol.

In step 32, the received multicast service data is forwarded to a multicast group through a multicast transmission protocol.

Herein, the multicast service data received through the unicast transmission protocol may include: an MAC address of a source transmitter of the multicast service data, an MAC address of the AP, a multicast MAC address, and an MAC address of a device receiving multicast service data through a unicast transmission protocol.

The multicast MAC address identifies a multicast group where multicast service data is finally to reach, the multicast group includes one or more target receivers. The MAC address of the device receiving multicast service data through a unicast transmission protocol identifies an MAC address of a multicast relay device.

Herein, the multicast service data forwarded to the multicast group through the multicast transmission protocol may include: an MAC address of the source transmitter of the multicast service data and the multicast MAC address.

The multicast MAC address identifies a multicast group where multicast service data is finally to reach, the multicast group includes one or more target receivers. Multicast service data can be sent to a target receiver in a corresponding multicast group according to a multicast MAC address in accordance with a multicast transmission protocol in the related art.

Herein, the step that the received multicast service data is forwarded to a multicast group through a multicast transmission protocol may include that: the received multicast service data is forwarded to the multicast group through a multicast transmission protocol via a WLAN;
or, the received multicast service data is forwarded to the multicast group through a multicast transmission protocol via a wired local area network;
or, when the multicast relay device is integrated with a target receiver in the multicast group, the received multicast service data is sent to a multicast service application corresponding to the integrated target receiver through a device internal interface.

Herein, the step that the received multicast service data is forwarded to a multicast group through a multicast transmission protocol may include that:
the multicast relay device is cascaded according to a network situation, to achieve multistage forwarding of multicast service data via the multicast relay device, including that:
a preceding multicast relay device receives multicast service data forwarded by an AP through a unicast transmission protocol;
the received multicast service data is forwarded to a subsequent multicast relay device; and
the subsequent multicast relay device forwards the multicast service data to a multicast group through a multicast transmission protocol.

The present application also provides a computer-readable storage medium storing computer-executable instructions, the above-mentioned method is implemented when the computer-executable instructions are executed.

The present application provides a multicast relay device. As shown in FIG. 4, the multicast relay device structurally includes:
a wireless receiving module, configured to receive, through a unicast transmission protocol, multicast service data forwarded by an AP; and
a data forwarding module, configured to forward the received multicast service data to a multicast group through a multicast transmission protocol.

Herein, the multicast service data received by the wireless receiving module may include: an MAC address of a source transmitter of the multicast service data, an MAC address of the AP, a multicast MAC address, and an MAC address of the multicast relay device.

The multicast MAC address identifies a multicast group where multicast service data is finally to reach, the multicast group including one or more target receivers.

Herein, the multicast service data forwarded to the multicast group by the data forwarding module may include: the MAC address of the source transmitter of the multicast service data and the multicast MAC address.

The multicast MAC address identifies a multicast group where multicast service data finally reaches, the multicast group includes one or more target receivers. Multicast service data can be sent to a target receiver in a corresponding multicast group according to a multicast MAC address in accordance with a multicast transmission protocol in the related art.

Herein, the data forwarding module may be configured to forward, via a wired local area network, the received multicast service data to the multicast group through a multicast transmission protocol;
or, the data forwarding module may be configured to forward, via a WLAN, the received multicast service data to the multicast group through a multicast transmission protocol;
or, the data forwarding module may be configured to send, when the multicast relay device is integrated with the target receiver in the multicast group, the received multicast service data to a multicast service application corresponding to the integrated target receiver through a device internal interface.

When the multicast relay device is integrated with the target receiver in the multicast group, the data forwarding module forwards the multicast service data to the multicast service application corresponding to the integrated target receiver through an internal interface of integrated equipment.

Herein, when the multicast relay device is connected by using a cascade manner,
a wireless receiving module of the preceding multicast relay device may be configured to receive the multicast service data from the AP; a data forwarding module of the preceding multicast relay device is configured to forward the received multicast service data to the subsequent multicast relay device through the multicast transmission protocol; and a data forwarding module of the subsequent multicast relay device may be configured to forward service data to the multicast group through the multicast transmission protocol.

### Embodiment 1:

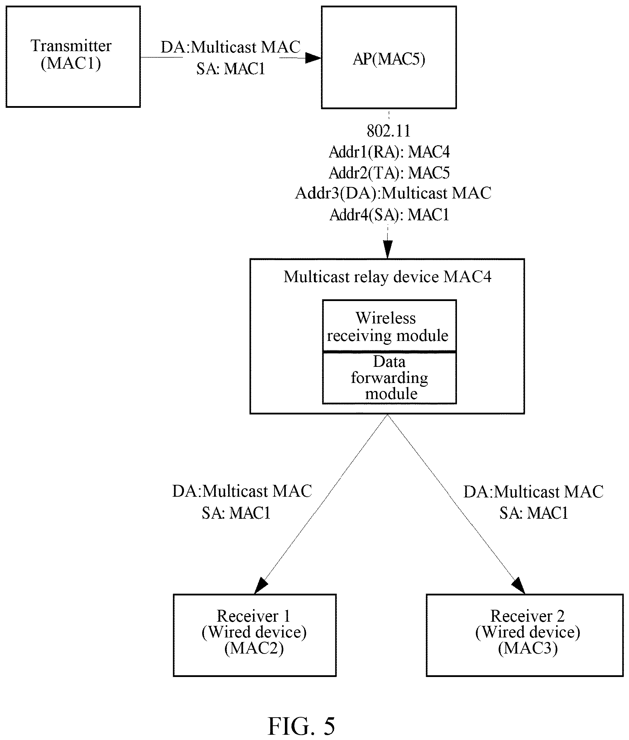

The embodiment 1 of the present application provides a multicast system. As shown in FIG. 5, the multicast system includes: a source transmitter, an AP, a multicast relay device, and a target receiver.

The source transmitter is configured to send source multicast service data.

The AP is configured to send, through a unicast transmission protocol, multicast service data to the multicast relay device provided in the present application as shown in FIG. 4.

The multicast relay device is configured to receive the multicast service data sent by the AP, and forward the received multicast service data to a multicast group through a multicast transmission protocol.

The target receiver is configured to receive the multicast service data sent by the multicast relay device, and the target receiver pertains to the multicast group.

Herein, the AP and the relay device are connected via a wired local area network.

The multicast service data sent to the multicast relay device by the AP includes: an MAC address of the source transmitter, an MAC address of the AP, a multicast MAC address, and an MAC address of the multicast relay device.

The multicast service data forwarded to the target receiver by the multicast relay device includes: an MAC address of the source transmitter and the multicast MAC address.

Address information included in multicast service data sent between all devices/modules in the present embodiment is specifically as follows.

An MAC address of a source transmitter is MAC1, an MAC address of an AP is MAC5, an MAC address of a multicast relay device is MAC4, an MAC address of a target receiver 1 in a multicast group is MAC2, and an MAC address of a target receiver 2 in a multicast group is MAC3.

Multicast service data is sent between the source transmitter and the AP by using a multicast protocol, the multicast service data includes: a target address: a multicast MAC address and a source transmitter address: MAC1.

Multicast service data is sent between the AP and the multicast relay device by using a unicast protocol, the multicast service data includes: a target receiver (multicast relay device) address: MAC4, a forwarder (AP) address: MAC5, and a target (target receiver) address: multicast MAC and a source transmitter address: MAC1.

The multicast relay device is connected with the target receiver 1 in the multicast group via a wired network, and multicast service data is sent by using a multicast protocol, the multicast service data includes: a target address: multicast MAC and a source transmitter address: MAC1. Terminal device 1 is found through the multicast MAC according to a multicast transmission protocol in the related art.

The multicast relay device is connected with the target receiver 2 in the multicast group via a wired network, and multicast service data is sent by using a multicast protocol, the multicast service data includes: a target address: multicast MAC and a source transmitter address: MAC1. Terminal device 2 is found through the multicast MAC according to a multicast transmission protocol in the related art.

### Embodiment 2:

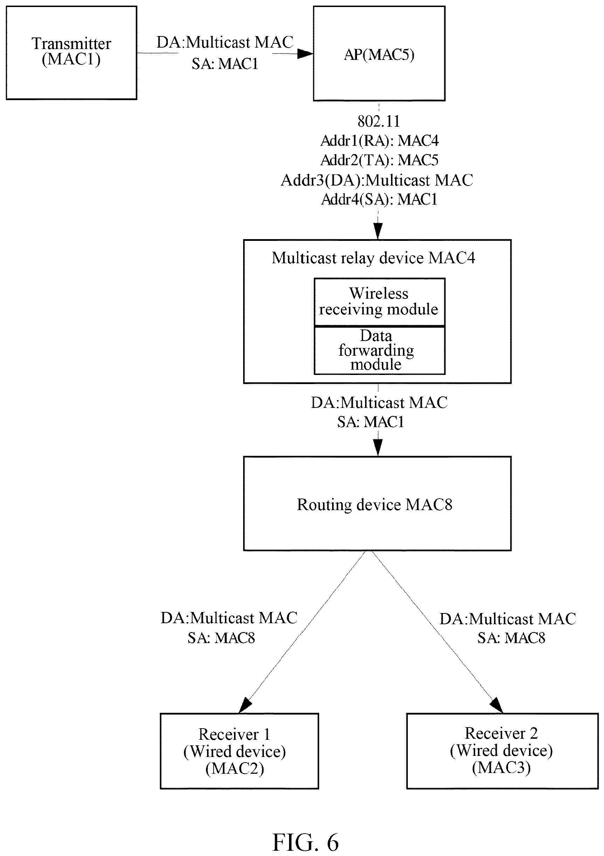

The embodiment 2 of the present application provides a multicast system. As shown in FIG. 6, the multicast system includes: a source transmitter, an AP, a multicast relay device, and a target receiver, and further includes a routing device.

The source transmitter is configured to send source multicast service data.

The AP is configured to send, through a unicast transmission protocol, multicast service data to the multicast relay device provided in the present application as shown in FIG. 4.

The multicast relay device is configured to receive the multicast service data sent by the AP, and forward the received multicast service data to a multicast group through a multicast transmission protocol.

The target receiver is configured to receive the multicast service data sent by the multicast relay device, and the target receiver pertains to the multicast group.

Herein, the AP and the relay device are connected via a wired local area network, and the multicast relay device forwards, via the routing device, the multicast service data reaching the target receiver.

In the present embodiment, information contained in the multicast service data sent to the multicast relay device by the AP is identical to that in the embodiment 1.

The multicast service data forwarded to the routing device by the multicast relay device includes: an MAC address of a source transmitter and a multicast MAC address.

Herein, the multicast service data forwarded to the target receiver in the multicast group by the routing device may include: an MAC address of the routing device and the multicast MAC address.

Address information included in multicast service data sent between all devices/modules in the present embodiment is specifically as follows.

An MAC address of a source transmitter is MAC1, an MAC address of an AP is MAC5, an MAC address of a multicast relay device is MAC4, an MAC address of a routing device is MAC8, an MAC address of a target receiver 1 in a multicast group is MAC2, and an MAC address of a target receiver 2 in a multicast group is MAC3.

Multicast service data is sent between the source transmitter and the AP by using a multicast protocol, the multicast service data includes: a target address: multicast MAC address and a source transmitter address: MAC1.

Multicast service data is sent between the AP and the multicast relay device by using a unicast protocol, the multicast service data includes: a target receiver (multicast relay device) address: MAC4, a forwarder (AP) address: MAC5, and a target (target receiver) address: multicast MAC and a source transmitter address: MAC1.

Multicast service data is sent between the multicast relay device and the routing device by using a multicast protocol, the multicast service data includes: a target address: multicast MAC and a source transmitter address: MAC1.

Multicast service data is sent between the routing device and the target receiver 1 in the multicast group by using a multicast protocol, the multicast service data includes: a target address: multicast MAC and a routing device address: MAC8.

Multicast service data is sent between the routing device and the target receiver 2 in the multicast group by using a multicast protocol, the multicast service data includes: a target address: multicast MAC and a routing device address: MAC8.

### Embodiment 3:

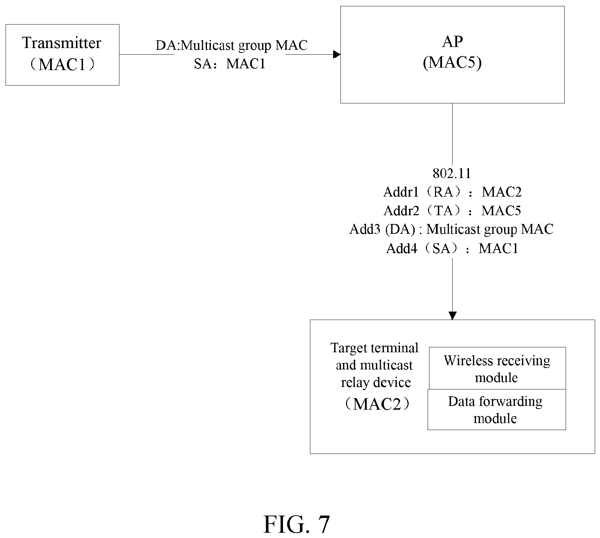

The embodiment 3 of the present application provides a multicast system. As shown in FIG. 7, the multicast system includes: a source transmitter, an AP, a multicast relay device, and a target receiver, herein the multicast relay device and a target receiver in a multicast group are integrated.

The source transmitter is configured to send source multicast service data.

The AP is configured to send, through a unicast transmission protocol, multicast service data to the multicast relay device provided in the present application as shown in FIG. 4.

The multicast relay device is configured to receive the multicast service data sent by the AP, and forward the received multicast service data to a multicast group through a multicast transmission protocol.

The target receiver is configured to receive the multicast service data sent by the multicast relay device, and the target receiver pertains to the multicast group.

Herein, the AP and the relay device are connected via a WLAN.

The multicast service data sent to the multicast relay device by the AP includes: an MAC address of the source transmitter, an MAC address of the AP, a multicast MAC address, and an MAC address of the multicast relay device.

A data forwarding module in the multicast relay device is configured to send, when the multicast relay device is integrated in the target receiver, the multicast service data received by the multicast relay device to a specific multicast service application in the integrated target receiver through an internal interface.

Address information included in multicast service data sent between all devices/modules in the present embodiment is specifically as follows.

An MAC address of a multicast source transmitter is MAC1, an MAC address of an AP is MAC5, and an MAC address of equipment of combining the relay device and a target receiver 1 in a multicast group is: MAC2.

Multicast service data is sent between the multicast source transmitter and the AP by using a multicast protocol, the multicast service data includes: a target address: a multicast group MAC address, and a source transmitter address: MAC1.

Multicast service data is sent between the AP and the multicast relay device by using a unicast protocol, the multicast service data includes: a target receiver (multicast relay device) address: MAC2, a forwarder (AP) address: MAC5, and a target (target receiver) address: multicast MAC, and a source transmitter address: MAC1.

### Embodiment 4:

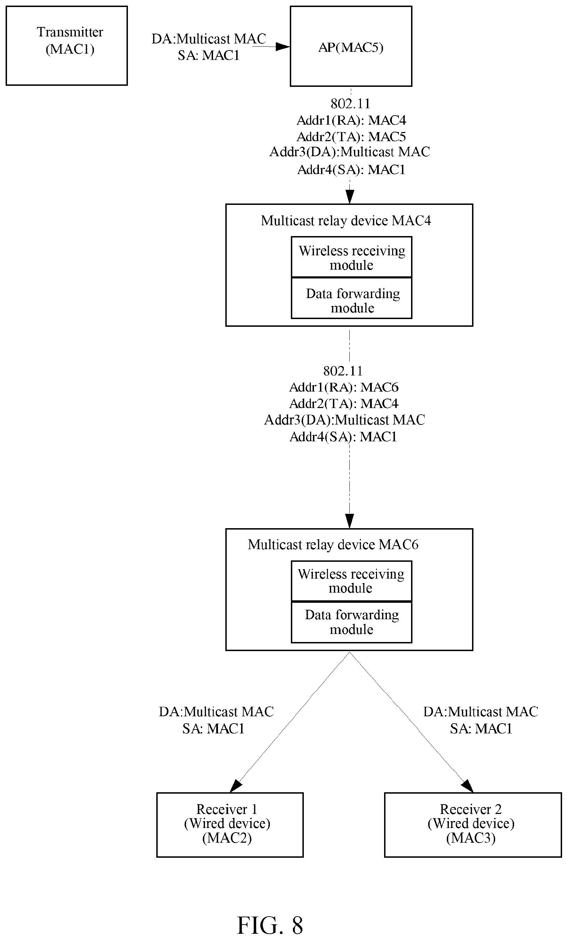

The embodiment 4 of the present application provides a multicast system. As shown in FIG. 8, the multicast system includes: a source transmitter, an AP, multicast relay devices, and a target receiver, herein the multicast relay devices include two multicast relay devices which are connected in a cascade manner.

The source transmitter is configured to send source multicast service data.

The AP is configured to send, through a unicast transmission protocol, multicast service data to the multicast relay device provided in the present application as shown in FIG. 4.

The multicast relay device 1 is configured to receive the multicast service data sent by the AP, and forward the received multicast service data to the multicast relay device 2 through a multicast transmission protocol.

The target receiver is configured to receive the multicast service data sent by the multicast relay device 2, and the target receiver pertains to a multicast group.

Herein, the AP and the multicast relay device 1 are connected via a WLAN, and the multicast relay device 1 and the multicast relay device 2 are connected via a WLAN.

The multicast service data sent to the multicast relay device 1 by the AP includes: an MAC address of the source transmitter, an MAC address of the AP, a multicast MAC address, and an MAC address of the multicast relay device 1.

The multicast service data sent to the multicast relay device 2 by the multicast relay device 1 includes: an MAC address of the source transmitter, an MAC address of the multicast relay device 1, a multicast MAC address, and an MAC address of the multicast relay device 2.

Address information included in multicast service data sent between all devices/modules in the present embodiment is specifically as follows.

An MAC address of a source transmitter is MAC1, an MAC address of an AP is MAC5, an MAC address of multicast relay device 1 is MAC4, and an MAC address of multicast relay device 2 is MAC6.

An MAC address of a target receiver 1 in a multicast group is MAC2, and an MAC address of a target receiver 2 in a multicast group is MAC3.

Multicast service data is sent between the source transmitter and the AP by using a multicast protocol, the multicast service data includes: a target address: a multicast group MAC address, and a source transmitter address: MAC1.

Multicast service data is sent between the AP and the multicast relay device 1 by using a unicast protocol, the multicast service data includes: a target RA: MAC4, a forwarder address: MAC5, a target address: multicast MAC, and a source transmitter address: MAC1.

Multicast service data is sent between the multicast relay device 1 and the multicast relay device 2 by using a unicast protocol, the multicast service data includes: a target RA: MAC6, a forwarder address: MAC4, a target address: multicast MAC, and a source transmitter address: MAC1.

Multicast service data is sent between the multicast relay device 2 and the target receiver 1 by using a unicast protocol, the multicast service data includes: a target address: multicast MAC, and a source transmitter address: MAC1.

Multicast service data is sent between the multicast relay device 2 and the target receiver 2 by using a unicast protocol, the multicast service data includes: a target address: multicast MAC, and a source transmitter address: MAC1.

In specific implementation of solutions in the present application, a manner of cascading first-stage multicast relay device and second-stage multicast relay device used in the example as shown in the present description is not limited, a manner of cascading multiple stages of relay device can be used for implementation according to practical networking demands, and these manners fall within the protection scope of the present application.

In the above-mentioned system embodiment provided in the present application, multicast service data is transmitted with a fixed source/target MAC address in a unicast manner between an AP and a relay device. Thus, by utilizing a current WLAN protocol standard, high-rate and perfect retransmission protection and Quality of Service (QoS) guaranteeing mechanism can be achieved, and a similar unicast tunnel is formed between the AP and the relay device. A multicast transmission module forwards the multicast service data to a subordinate target receiver in a traditional multicast transmission manner, thereby maintaining the advantages of traditional multicast transmission.

The ordinary skilled in the art may understand that all or some of the steps in the above-mentioned embodiment may be implemented by using a computer program flow. The computer program may be stored in a computer-readable storage medium. The computer program is executed on a corresponding hardware platform (such as system, equipment, device and apparatus). During execution, the computer program includes one or a combination of the steps of the method embodiment.

Alternatively, all or some of the steps in the above-mentioned embodiment may also be implemented by using an integrated circuit. These steps may be manufactured into individual integrated circuit modules respectively, or multiple modules or steps thereof are manufactured into a single integrated circuit module. Thus, the present application is not limited to any specific combination of hardware and software.

The device/function module/function unit in the above-mentioned embodiment may be implemented by using a general computation device. They may be centralized on a single computation device or may be distributed on a network composed of multiple computation devices.

When being implemented in a form of software function module and sold or used as an independent product, the device/function module/function unit in the above-mentioned embodiment may be stored in a computer-readable storage medium. The above-mentioned computer-readable storage medium may be a read-only memory, a magnetic disk or an optical disk.

The protection scope of the present application is determined by the protection scope of the claims.

The ordinary skilled in the art may understand that all or some steps in the above-mentioned method may be implemented by instructing relevant hardware (such as a processor) via a program, the program may be stored in a computer-readable storage medium such as a read-only memory, a magnetic disk or an optical disk. Alternatively, all or some steps in the above-mentioned embodiments may be implemented by using one or more integrated circuits. Correspondingly, each module/unit in the above-mentioned embodiments may be implemented in a form of hardware. For example, the corresponding functions are implemented via an integrated circuit, or may be implemented in a form of software function module. For example, the corresponding functions are implemented by executing programs/instructions stored in a memory via a processor. The embodiments of the present invention are not limited to combination of hardware and software of any specific form.

### Industrial Applicability

In the provided embodiments, multicast service data is transmitted with a fixed source/target MAC address in a unicast manner between an AP and a relay device. Thus, by utilizing a current WLAN protocol standard, high-rate and perfect retransmission protection and QoS guaranteeing mechanism can be achieved, and a similar unicast tunnel is formed between the AP and the relay device. A multicast transmission module forwards the multicast service data to a subordinate target receiver in a traditional multicast transmission manner, thereby maintaining the advantages of traditional multicast transmission.

## Claims

1. A multicast method implemented by a multicast relay device, comprising:
receiving multicast service data forwarded by an Access Point, AP, through a unicast transmission protocol (31), wherein, the multicast service data is transmitted with a fixed source/target MAC address in a unicast manner between the AP and the multicast relay device; and
forwarding the received multicast service data to a multicast group through a multicast transmission protocol (32); **characterized in that**
the multicast service data received through the unicast transmission protocol comprises: a Media Access Control, MAC, address of a source transmitter of the multicast service data, an MAC address of the AP, a multicast MAC address, and an MAC address of the multicast relay device.

2. The method according to claim 1, wherein
the multicast service data forwarded to the multicast group through the multicast transmission protocol comprises: an MAC address of the source transmitter of the multicast service data and the multicast MAC address.

3. The method according to claim 1, wherein
the step of forwarding the received multicast service data to a multicast group through a multicast transmission protocol comprises: forwarding the received multicast service data to the multicast group through a multicast transmission protocol via a Wireless Local Area Network, WLAN;
or, forwarding the received multicast service data to the multicast group through a multicast transmission protocol via a wired local area network.

4. A multicast relay device, comprising:
a wireless receiving module, configured to receive multicast service data forwarded by an Access Point, AP through a unicast transmission protocol, wherein, the multicast service data is transmitted with a fixed source/target MAC address in a unicast manner between the AP and the multicast relay device; and
a data forwarding module, configured to forward the received multicast service data to a multicast group through a multicast transmission protocol; **characterized in that**
the multicast service data received by the wireless receiving module comprises: a Media Access Control, MAC, address of a source transmitter of the multicast service data, an MAC address of the AP, a multicast MAC address, and an MAC address of the multicast relay device.

5. The multicast relay device according to claim 4, wherein
the multicast service data forwarded to the multicast group by the data forwarding module comprises: the MAC address of the source transmitter of the multicast service data and the multicast MAC address.

6. The multicast relay device according to claim 4, wherein
the data forwarding module is configured to forward, via a wired local area network, the received multicast service data to the multicast group through a multicast transmission protocol;
or, the data forwarding module is configured to forward, via a Wireless Local Area Network, WLAN, the received multicast service data to the multicast group through a multicast transmission protocol.

7. The multicast relay device according to claim 4, wherein
the multicast relay device is integrated with a target receiver in the multicast group, and the data forwarding module is configured to send, when the multicast relay device is integrated with the target receiver in the multicast group, the received multicast service data to a multicast service application corresponding to the integrated target receiver through a device internal interface.

8. The multicast relay device according to claim 4, wherein when the multicast relay device is connected by using a cascade manner, the wireless receiving module is configured to receive, through a multicast transmission protocol, multicast service data forwarded by a preceding multicast relay device,
when the multicast relay device is connected by using a cascade manner, the data forwarding module is configured to forward, after the wireless receiving module receives the multicast service data forwarded by the preceding multicast relay device through the multicast transmission protocol, the received multicast service data to a subsequent multicast relay device through the multicast transmission protocol.

9. The multicast relay device according to claim 8, wherein
the multicast service data forwarded by the preceding multicast relay device comprises: an MAC address of the source transmitter, an MAC address of the preceding multicast relay device, a multicast MAC address, and an MAC address of the multicast relay device; and
the multicast service data forwarded to the subsequent multicast relay device comprises: an MAC address of the source transmitter, an MAC address of the multicast relay device, a multicast MAC address, and an MAC address of the subsequent multicast relay device.

10. A multicast system, comprising: a source transmitter, an Access Point, AP, the multicast relay device according to any one of claims 4 to 9, and a target receiver,
wherein the source transmitter is configured to send source multicast service data to the AP;
the AP is configured to send multicast service data to the multicast relay device through a unicast transmission protocol, wherein, the multicast service data is transmitted with a fixed source/target MAC address in a unicast manner between the AP and the multicast relay device;
the multicast relay device is configured to receive the multicast service data sent by the AP, and forward the received multicast service data to a multicast group through a multicast transmission protocol; and
the target receiver is configured to receive the multicast service data sent by the multicast relay device, the target receiver pertains to the multicast group; wherein
the multicast service data sent to the multicast relay device by the AP comprises: a Media Access Control, MAC, address of the source transmitter, an MAC address of the AP, a multicast MAC address, and an MAC address of the multicast relay device.

11. The system according to claim 10, wherein
the multicast service data forwarded to the target receiver by the multicast relay device comprises: an MAC address of the source transmitter and the multicast MAC address.

12. The system according to claim 10, wherein
the multicast relay device and the target receiver are connected via a Wireless Local Area Network, WLAN;
or, the multicast relay device and the target receiver are connected via a wired local area network;
or, the multicast relay device and the target receiver are integrated.

13. The system according to claim 10, wherein the multicast relay device is further configured to forward the received multicast service data to a subsequent multicast relay device through the multicast transmission protocol,
the system further comprises:
the subsequent multicast relay device, configured to receive the multicast service data forwarded by the multicast relay device, and forward the received multicast service data to the multicast group through the multicast transmission protocol.

14. The system according to claim 13, wherein
the multicast service data sent to the subsequent multicast relay device by the multicast relay device comprises: an MAC address of the source transmitter, an MAC address of the multicast relay device, a multicast MAC address, and an MAC address of the subsequent multicast relay device.

## Patentansprüche

1. Multicast-Verfahren, das durch eine Multicast-Relaisvorrichtung implementiert ist, das Folgendes umfasst:
Empfangen von Multicast-Dienstdaten, die durch einen Zugangspunkt (AP) über ein Unicast-Übertragungsprotokoll weitergeleitet werden (31), wobei die Multicast-Dienstdaten mit einer festen Quell-/Ziel-MAC-Adresse in einer Unicast-Weise zwischen dem AP und der Multicast-Relaisvorrichtung übertragen werden; und
Weiterleiten der empfangenen Multicast-Dienstdaten an eine Multicast-Gruppe über ein Multicast-Übertragungsprotokoll (32);
**dadurch gekennzeichnet, dass**
die Multicast-Dienstdaten, die über das Unicast-Übertragungsprotokoll empfangen werden, Folgendes umfassen: eine Medienzugangsteuerungsadresse (MAC-Adresse) eines Quellsenders der Multicast-Dienstdaten, eine MAC-Adresse des AP, eine Multicast-MAC-Adresse und eine MAC-Adresse der Multicast-Relaisvorrichtung.

2. Verfahren nach Anspruch 1, wobei
die Multicast-Dienstdaten, die über das Multicast-Übertragungsprotokoll an die Multicast-Gruppe weitergeleitet werden, Folgendes umfassen: eine MAC-Adresse des Quellsenders der Multicast-Dienstdaten und die Multicast-MAC-Adresse.

3. Verfahren nach Anspruch 1, wobei
der Schritt des Weiterleitens der empfangenen Multicast-Dienstdaten an eine Multicast-Gruppe über ein Multicast-Übertragungsprotokoll Folgendes umfasst: Weiterleiten der empfangenen Multicast-Dienstdaten an die Multicast-Gruppe über ein Multicast-Übertragungsprotokoll mittels eines drahtlosen lokalen Netzwerks (WLAN);
oder Weiterleiten der empfangenen Multicast-Dienstdaten an die Multicast-Gruppe über ein Multicast-Übertragungsprotokoll mittels eines drahtgebundenen lokalen Netzwerks.

4. Multicast-Relaisvorrichtung, die Folgendes umfasst:
ein drahtloses Empfangsmodul, das dazu konfiguriert ist, Multicast-Dienstdaten, die durch einen Zugangspunkt (AP) über ein Unicast-Übertragungsprotokoll weitergeleitet werden, zu empfangen, wobei die Multicast-Dienstdaten mit einer festen Quell-/Ziel-MAC-Adresse in einer Unicast-Weise zwischen dem AP und der Multicast-Relaisvorrichtung übertragen werden; und
ein Datenweiterleitungsmodul, das dazu konfiguriert ist, die empfangenen Multicast-Dienstdaten an eine Multicast-Gruppe über ein Multicast-Übertragungsprotokoll weiterzuleiten; **dadurch gekennzeichnet, dass**
die durch das drahtlose Empfangsmodul empfangenen Multicast-Dienstdaten Folgendes umfassen: eine Medienzugangsteuerungsadresse (MAC-Adresse) eines Quellsenders der Multicast-Dienstdaten, eine MAC-Adresse des AP, eine Multicast-MAC-Adresse und eine MAC-Adresse der Multicast-Relaisvorrichtung.

5. Multicast-Relaisvorrichtung nach Anspruch 4, wobei die Multicast-Dienstdaten, die durch das Datenweiterleitungsmodul an die Multicast-Gruppe weitergeleitet werden, Folgendes umfassen: die MAC-Adresse des Quellsenders der Multicast-Dienstdaten und die Multicast-MAC-Adresse.

6. Multicast-Relaisvorrichtung nach Anspruch 4, wobei
das Datenweiterleitungsmodul dazu konfiguriert ist, die empfangenen Multicast-Dienstdaten an die Multicast-Gruppe über ein Multicast-Übertragungsprotokoll mittels eines drahtgebundenen lokalen Netzwerks weiterzuleiten;
oder das Datenweiterleitungsmodul dazu konfiguriert ist, die empfangenen Multicast-Dienstdaten an die Multicast-Gruppe über ein Multicast-Übertragungsprotokoll mittels eines drahtlosen lokalen Netzwerks (WLAN) weiterzuleiten.

7. Multicast-Relaisvorrichtung nach Anspruch 4, wobei die Multicast-Relaisvorrichtung in einen Zielempfänger in der Multicast-Gruppe integriert ist und das Datenweiterleitungsmodul dazu konfiguriert ist, um, wenn die Multicast-Relaisvorrichtung in den Zielempfänger in der Multicast-Gruppe integriert ist, die empfangenen Multicast-Dienstdaten an eine Multicast-Dienstanwendung, die dem integrierten Zielempfänger entspricht, über eine vorrichtungsinterne Schnittstelle zu senden.

8. Multicast-Relaisvorrichtung nach Anspruch 4, wobei das drahtlose Empfangsmodul, wenn die Multicast-Relaisvorrichtung unter Verwendung einer Kaskade verbunden ist, dazu konfiguriert ist, über ein Multicast-Übertragungsprotokoll Multicast-Dienstdaten zu empfangen, die durch eine vorherige Multicast-Relaisvorrichtung weitergeleitet wurden,
wobei das Datenweiterleitungsmodul, wenn die Multicast-Relaisvorrichtung unter Verwendung einer Kaskade verbunden ist, dazu konfiguriert ist, die empfangenen Multicast-Dienstdaten über das Multicast-Übertragungsprotokoll an eine nachfolgende Multicast-Relaisvorrichtung weiterzuleiten, nachdem das drahtlose Empfangsmodul die Multicast-Dienstdaten, die durch die vorherige Multicast-Relaisvorrichtung über das Multicast-Übertragungsprotokoll weitergeleitet wurden, empfangen hat.

9. Multicast-Relaisvorrichtung nach Anspruch 8, wobei
die durch die vorherige Multicast-Relaisvorrichtung weitergeleiteten Multicast-Dienstdaten Folgendes umfassen: eine MAC-Adresse des Quellsenders, eine MAC-Adresse der vorherigen Multicast-Relaisvorrichtung, eine Multicast-MAC-Adresse und eine MAC-Adresse der Multicast-Relaisvorrichtung; und
die an die nachfolgende Multicast-Relaisvorrichtung weitergeleiteten Multicast-Dienstdaten Folgendes umfassen: eine MAC-Adresse des Quellsenders, eine MAC-Adresse der Multicast-Relaisvorrichtung, eine Multicast-MAC-Adresse und eine MAC-Adresse der nachfolgenden Multicast-Relaisvorrichtung.

10. Multicast-System, das Folgendes umfasst: einen Quellsender, einen Zugangspunkt (AP), die Multicast-Relaisvorrichtung nach einem der Ansprüche 4 bis 9 und einen Zielempfänger,
wobei der Quellsender dazu konfiguriert ist, Quell-Multicast-Dienstdaten an den AP zu senden;
der AP dazu konfiguriert ist, Multicast-Dienstdaten über ein Unicast-Übertragungsprotokoll an die Multicast-Relaisvorrichtung zu senden, wobei die Multicast-Dienstdaten mit einer festen Quell-/Ziel-MAC-Adresse in einer Unicast-Weise zwischen dem AP und der Multicast-Relaisvorrichtung übertragen werden;
die Multicast-Relaisvorrichtung dazu konfiguriert ist, die durch den AP gesendeten Multicast-Dienstdaten zu empfangen und die empfangenen Multicast-Dienstdaten über ein Multicast-Übertragungsprotokoll an eine Multicast-Gruppe weiterzuleiten; und
der Zielempfänger dazu konfiguriert ist, die durch die Multicast-Relaisvorrichtung gesendeten Multicast-Dienstdaten zu empfangen, wobei der Zielempfänger zu der Multicast-Gruppe gehört; wobei
die durch den AP an die Multicast-Relaisvorrichtung gesendeten Multicast-Dienstdaten Folgendes umfassen: eine Medienzugangsteuerungsadresse (MAC-Adresse) des Quellsenders, eine MAC-Adresse des AP, eine Multicast-MAC-Adresse und eine MAC-Adresse der Multicast-Relaisvorrichtung.

11. System nach Anspruch 10, wobei
die durch die Multicast-Relaisvorrichtung an den Zielempfänger weitergeleiteten Multicast-Dienstdaten Folgendes umfassen: eine MAC-Adresse des Quellsenders und die Multicast-MAC-Adresse.

12. System nach Anspruch 10, wobei
die Multicast-Relaisvorrichtung und der Zielempfänger über ein drahtloses lokales Netzwerk (WLAN) verbunden sind;
oder die Multicast-Relaisvorrichtung und der Zielempfänger über ein drahtgebundenes lokales Netzwerk verbunden sind;
oder die Multicast-Relaisvorrichtung und der Zielempfänger integriert sind.

13. System nach Anspruch 10, wobei die Multicast-Relaisvorrichtung ferner dazu konfiguriert ist, die empfangenen Multicast-Dienstdaten über das Multicast-Übertragungsprotokoll an eine nachfolgende Multicast-Relaisvorrichtung weiterzuleiten,
wobei das System ferner Folgendes umfasst:
die nachfolgende Multicast-Relaisvorrichtung, die dazu konfiguriert ist, die durch die Multicast-Relaisvorrichtung weitergeleiteten Multicast-Dienstdaten zu empfangen und die empfangenen Multicast-Dienstdaten über das Multicast-Übertragungsprotokoll an die Multicast-Gruppe weiterzuleiten.

14. System nach Anspruch 13, wobei
die durch die Multicast-Relaisvorrichtung an die nachfolgende Multicast-Relaisvorrichtung gesendeten Multicast-Dienstdaten Folgendes umfassen: eine MAC-Adresse des Quellsenders, eine MAC-Adresse der Multicast-Relaisvorrichtung, eine Multicast-MAC-Adresse und eine MAC-Adresse der nachfolgenden Multicast-Relaisvorrichtung.

## Revendications

1. Procédé de multidiffusion mis en œuvre par un dispositif de relais de multidiffusion, comprenant :
la réception des données de service de multidiffusion transmises par un point d'accès (PA), via un protocole de transmission de monodiffusion (31), dans lequel, les données de service de multidiffusion sont transmises avec une adresse MAC source/cible fixe en monodiffusion entre le PA et le dispositif de relais de multidiffusion ; et
la transmission des données de service de multidiffusion reçues à un groupe de multidiffusion via un protocole de transmission de multidiffusion (32) ; **caractérisé en ce que**
les données de service de multidiffusion reçues via le protocole de transmission de monodiffusion comprennent : un contrôle d'accès au support, MAC, une adresse d'un émetteur source des données de service de multidiffusion, une adresse MAC du PA, une adresse MAC de multidiffusion et une adresse MAC du dispositif de relais de multidiffusion.

2. Procédé selon la revendication 1, dans lequel les données de service de multidiffusion transmises au groupe de multidiffusion via le protocole de transmission de multidiffusion comprennent : une adresse MAC de l'émetteur source des données de service de multidiffusion et l'adresse MAC de multidiffusion.

3. Procédé selon la revendication 1, dans lequel
l'étape de transmission des données de service de multidiffusion reçues à un groupe de multidiffusion via un protocole de transmission de multidiffusion comprend : la transmission des données de service de multidiffusion reçues au groupe de multidiffusion via un protocole de transmission de multidiffusion via un réseau local sans fil (WLAN) ;
ou, la transmission des données de service de multidiffusion reçues au groupe de multidiffusion via un protocole de transmission de multidiffusion via un réseau local câblé.

4. Dispositif de relais de multidiffusion, comprenant :
un module de réception sans fil, configuré pour recevoir des données de service de multidiffusion transmises par un point d'accès, PA, via un protocole de transmission de monodiffusion,
dans lequel, les données de service de multidiffusion sont transmises avec une adresse MAC source/cible fixe en monodiffusion entre le PA et le dispositif de relais de multidiffusion ; et
un module de transmission de données, configuré pour transmettre les données de service de multidiffusion reçues à un groupe de multidiffusion via un protocole de transmission de multidiffusion ; **caractérisé en ce que**
les données de service de multidiffusion reçues par le module de réception sans fil comprennent : un contrôle d'accès au support (MAC), une adresse d'un émetteur source des données de service de multidiffusion, une adresse MAC du PA, une adresse MAC de multidiffusion et une adresse MAC du dispositif de relais de multidiffusion.

5. Dispositif de relais de multidiffusion selon la revendication 4, dans lequel
les données de service de multidiffusion transmises au groupe de multidiffusion par le module de transmission de données comprennent : l'adresse MAC de l'émetteur source des données de service de multidiffusion et l'adresse MAC de multidiffusion.

6. Dispositif de relais de multidiffusion selon la revendication 4, dans lequel
le module de transmission de données est configuré pour transmettre, via un réseau local câblé, les données de service de multidiffusion reçues au groupe de multidiffusion via un protocole de transmission de multidiffusion ;
ou, le module de transmission de données est configuré pour transmettre, via un réseau local sans fil (WLAN), les données de service de multidiffusion reçues au groupe de multidiffusion via un protocole de transmission de multidiffusion.

7. Dispositif de relais de multidiffusion selon la revendication 4, dans lequel
le dispositif de relais de multidiffusion est intégré à un récepteur cible dans le groupe de multidiffusion, et le module de transmission de données est configuré pour envoyer, lorsque le dispositif de relais de multidiffusion est intégré au récepteur cible dans le groupe de multidiffusion, les données de service de multidiffusion reçues à une application de service de multidiffusion correspondant au récepteur cible intégré via une interface interne du dispositif.

8. Dispositif de relais de multidiffusion selon la revendication 4, dans lequel lorsque le dispositif de relais de multidiffusion est connecté en cascade, le module de réception sans fil est configuré pour recevoir, via un protocole de transmission de multidiffusion, des données de service de multidiffusion transmises par un dispositif de relais de multidiffusion précédent,
lorsque le dispositif de relais de multidiffusion est connecté en cascade, le module de transmission de données est configuré pour transmettre, après que le module de réception sans fil a reçu les données de service de multidiffusion transmises par le dispositif de relais de multidiffusion précédent via le protocole de transmission de multidiffusion, les données de service de multidiffusion reçues à un dispositif de relais de multidiffusion suivant via le protocole de transmission de multidiffusion.

9. Dispositif de relais de multidiffusion selon la revendication 8, dans lequel
les données de service de multidiffusion transmises par le dispositif de relais de multidiffusion précédent comprennent :
une adresse MAC de l'émetteur source, une adresse MAC du dispositif de relais de multidiffusion précédent, une adresse MAC de multidiffusion et une adresse MAC du dispositif de relais de multidiffusion ; et
les données de service de multidiffusion transmises au dispositif de relais de multidiffusion suivant comprennent : une adresse MAC de l'émetteur source, une adresse MAC du dispositif de relais de multidiffusion, une adresse MAC de multidiffusion et une adresse MAC du dispositif de relais de multidiffusion suivant.

10. Un système de multidiffusion, comprenant : un émetteur source, un point d'accès, PA, le dispositif de relais de multidiffusion selon l'une quelconque des revendications 4 à 9, et un récepteur cible,
dans lequel l'émetteur source est configuré pour envoyer des données de service de multidiffusion source au PA ;
le PA est configuré pour envoyer des données de service de multidiffusion au dispositif de relais de multidiffusion via un protocole de transmission de monodiffusion, dans lequel les données de service de multidiffusion sont transmises avec une adresse MAC source/cible fixe en monodiffusion entre le PA et le dispositif de relais de multidiffusion ;
le dispositif de relais de multidiffusion est configuré pour recevoir les données de service de multidiffusion envoyées par le PA, et transmettre les données de service de multidiffusion reçues à un groupe de multidiffusion via un protocole de transmission de multidiffusion ; et
le récepteur cible est configuré pour recevoir les données de service de multidiffusion envoyées par le dispositif de relais de multidiffusion, le récepteur cible appartient au groupe de multidiffusion ; dans lequel les données de service de multidiffusion envoyées au dispositif de relais de multidiffusion par le PA comprennent : un contrôle d'accès au support (MAC), une adresse de l'émetteur source, une adresse MAC du PA, une adresse MAC de multidiffusion et une adresse MAC du dispositif de relais de multidiffusion.

11. Système selon la revendication 10, dans lequel les données de service de multidiffusion transmises au récepteur cible par le dispositif de relais de multidiffusion comprennent : une adresse MAC de l'émetteur source et l'adresse MAC de multidiffusion.

12. Système selon la revendication 10, dans lequel
le dispositif de relais de multidiffusion et le récepteur cible sont connectés via un réseau local sans fil (WLAN) ;
ou, le dispositif de relais de multidiffusion et le récepteur cible sont connectés via un réseau local câblé ;
ou, le dispositif de relais de multidiffusion et le récepteur cible sont intégrés.

13. Système selon la revendication 10, dans lequel le dispositif de relais de multidiffusion est en outre configuré pour transmettre les données de service de multidiffusion reçues à un dispositif de relais de multidiffusion suivant via le protocole de transmission de multidiffusion,
le système comprend en outre :
le dispositif de relais de multidiffusion suivant, configuré pour recevoir les données de service de multidiffusion transmises par le dispositif de relais de multidiffusion, et la transmission des données de service de multidiffusion reçues au groupe de multidiffusion via le protocole de transmission de multidiffusion.

14. Système selon la revendication 13, dans lequel les données de service de multidiffusion envoyées au dispositif de relais de multidiffusion suivant par le dispositif de relais de multidiffusion comprennent : une adresse MAC de l'émetteur source, une adresse MAC du dispositif de relais de multidiffusion, une adresse MAC de multidiffusion et une adresse MAC du dispositif de relais de multidiffusion suivant.
